# EUROPEAN PATENT APPLICATION

(11) **EP 3 162 599 A1**
(43) Date of publication of application: **03.05.2017**
(21) Application number: 15191581.6
(22) Date of filing: 27.10.2015
(51) Int. Cl.: B60H 1/00

(54) **METHOD AND DEVICE FOR RECOVERY AND RECHARGING OF REFRIGERANT FLUID IN MOTOR VEHICLES WITH OIL RECOVERY**

(71) Applicant: BRAIN BEE S.P.A., 43126 Parma (IT)
(72) Inventor: CANTADORI, Andrea, 43126 Parma (IT)
(74) Representative: Benelli, Cristian

(57) **Abstract**

A method and a station (20) for recovery and recharging of refrigerant in motor vehicles, wherein at the end of the coolant recovery step, i.e. at the end of the emptying of the A/C system of the vehicle, an amount of coolant is taken from the cylinder and in a completely automated manner, by operating the charging solenoid valves, fills the pipes so as to have a relative pressure of 2-3 bar. Thereafter, the coolant amount is recovered and is sprayed on the wall of a distiller of the station (20), thus facilitating the "cleaning" of its wall and enabling recovery of oil from the distiller. The slight pressure generated further pushes any oil residues standing in the coalescing filter towards the drain.

## Description

### SCOPE OF THE INVENTION

The present invention relates to automotive climate stations, particularly for use in repair shops, coolant recovery and recharging stations for air conditioning in motor vehicles.

### BACKGROUND ART

Air conditioning systems in motor vehicles are subject to coolant leakage and require periodic refills. It is therefore necessary to carry out a system recharge and/or regeneration; to this end, devices have been developed for maintenance of air conditioning systems able to carry out the recovery, recycling and recharging of the coolant inside the system itself.

In every A/C service station, among other components better specified hereinafter, there is also an exhaust oil drain valve: this is the lubricating oil (typically PAG oil, a synthetic lubricant fluid for refrigeration compressors based on polyalkylene glycols or POE, a fully synthetic polyester lubricant fluid) that circulates in the A/C system of the vehicle to prevent the compressor seizing.

Even if the operation of recovery and recycling of the coolant from the vehicle, an operation which is preparatory to its refill, is made so as to suck the coolant only in the vapor phase, nevertheless a fraction of said lubricating oil is still recovered together with the coolant itself.

Since the coolant must be recycled before being introduced back into the cylinder, i.e. purified from contaminants, and since said lubricant oil is also present among said contaminants, it is necessary to introduce an oil separator, or a distiller which works by a combined coalescent/evaporative effect.

To this end, the coolant vapor recovered from the system is sucked and sprayed against the metal wall of the distiller, kept sufficiently hot.

The expansion of the coolant cools it down, favoring the deposition of oil droplets along the wall, while the heat of the wall itself facilitates evaporation of the coolant which continues its way to the suction compressor. The oil droplets, sliding along the wall, encounter a coalescing filter that facilitates the agglomeration thereof for a subsequent discharge from the bottom of the distiller into a collection vessel.

The amount of oil extracted is measured so that an equal amount of new oil is refilled into the A/C system before the next charging with coolant.

The amounts of oil extracted are typically on the order of 5-10 grams for medium-sized vehicles.

These are therefore small amounts: it is understandable that, in order to attain an accurate measurement, the oil deposited on the walls of the distiller is as much as possible unloaded outside.

### DESCRIPTION AND ADVANTAGES OF THE INVENTION

The object of the present invention is to provide an improved method and a climate station carrying out a full extraction of the oil deposited on the walls of the distiller, within the scope of a simple, rational and cost-effective solution.

These and other objects are achieved with the features of the invention described in the independent claim 1. The dependent claims describe preferred and/or particularly advantageous aspects of the invention.

In particular, an embodiment of the present invention provides that upon completion of the recovery, i.e. at the end of the emptying of the A/C system of the vehicle, the exhaust oil is discharged as usual (distillation by combined coalescing/evaporative effect described above); then, once the oil has been discharged, the control logic of the climate station is configured and provides for taking a small amount of coolant, on the order of 50-100 grams, from the cylinder and, in a fully automated manner, by operating the charging solenoid valves on the high pressure side of the charging circuit, said introduction of coolant allows:
- filling the pipes of the conditioning circuit that is established during the connection of the climate station to the conditioning circuit of the motor vehicle, and then
- establishing a small pressure, on the order of 2-3 relative bar, within the circuit.

Once the above operations have been carried out, the control logic of the climate station is now configured and provides for:
- recovering the amount of coolant introduced and which, since taken from the cylinder, was originally pure, i.e. not contaminated by oil in significant amounts,
- spraying the recovered coolant on the wall of the distiller; since this coolant does not contain oil in suspension, it further acts on the wall of the distiller, cleaning it further.

With this solution, a first advantage is that the net benefit to the user is that the discharge of the oil recovered is obtained at no cost (i.e. without additional hardware or electro-pneumatic mechanisms compared to a conventional station), with residues that typically are less than 5% (i.e. less than 5% of the oil recovered remains inside the distiller).

Also, with the slight pressure generated inside the circuit, any oil residues standing in the coalescing filter are conveyed towards the drain.

Said objects and advantages are all achieved by the climate station for charging and recovery systems of motor vehicles with recovery of the exhaust oil and method thereof, object of the present invention, characterized by what set out in the following claims.

### BRIEF DESCRIPTION OF THE FIGURES

This and other features will be more apparent from the following description of some embodiments, illustrated purely by way of example in the accompanying drawings.
- Figure 1: generically shows a circuit diagram for connecting a charging station to the air conditioning system of a motor vehicle,
- Figure 2: shows in detail the circuit diagram of an A/C charging station for motor vehicles, comprising a system configured to carry out the oil recovery as provided by the invention.

### DESCRIPTION OF THE INVENTION

The present invention will now be described in detail with reference to the accompanying drawings to enable a man skilled in the art to implement and use it. Various modifications to the embodiments described will be immediately apparent to the man skilled in the art.

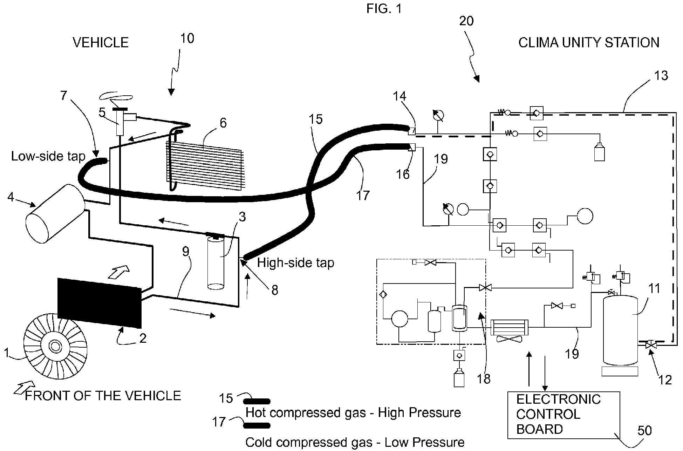

With reference to figure 1, reference numeral 10 indicates an air conditioning or climate control system in a motor vehicle; it is installed in a vehicle and comprises a refrigeration circuit within which a coolant gas of predetermined type circulates at low pressure.

The main components in said system 10 are:
- a compressor 4;
- a condenser 2 and a ventilation system 1;
- at least one dehydrator filter 3,
- an expansion valve 5;
- an evaporator 6.

The compressor is the component designed to generate the pressure difference, a difference that allows the cycle to be repeated: in fact, it pumps the coolant fluid through the evaporator, where it evaporates at low pressure by absorbing heat from the outside (from air, earth, water), then compresses it and pushes it inside the condenser, where it condenses at high pressure by releasing the previously absorbed heat to the outside. The coolant fluid changes state inside the two heat exchangers: in the evaporator it changes from liquid to gaseous, in the condenser it changes from gaseous to liquid.

The motor vehicle air conditioning system 10 also has two external terminals/connectors 7, 8 in low pressure (external low pressure connector) and high pressure (external high pressure connector), respectively, through which it is possible to recharge and/or recover the coolant gas through the connection with corresponding coupling devices of the climate station, or A/C station, in order to carry out the maintenance and recharge operations and other necessary checks.

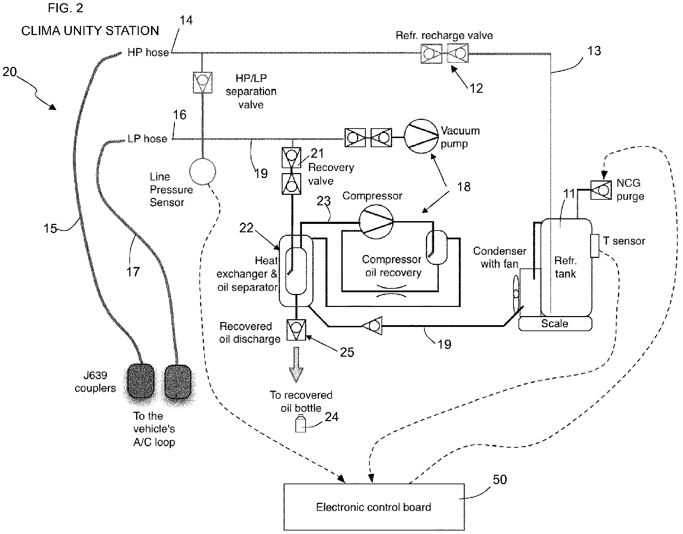

Again with reference to figure 1 and now also to figure 2, reference numeral 20 indicates a climate recovery and charging station comprising at least the following components:
- a coolant tank 11, or cylinder,
- a shut-off solenoid valve 12 for opening and closing at least one coolant fluid outlet pipe 13, said pipe 13 reaches, through already-known suitable systems, an

- HP, i.e. high pressure, connection, indicated with reference numeral 14, connectable in the respective high pressure branch 15 to the conditioning system 10, so as to be connected to the high pressure liquid coolant, or fitting/valve 8;
- an LP, i.e. low pressure, connection is also provided, which is identified by reference numeral 16, and connectable through the corresponding branch 17 to the conditioning system, in the fitting indicated with reference numeral 7 generally placed after the expansion valve; the coolant is in a gaseous state and at low pressure;
- a suction unit 18 that, through a compressor element, sucks/extracts the coolant from the conditioning system of the vehicle, through the low pressure branch 17, and sends it to tank 11 through pipes 19, so as to drain the system,
- At least one data processing and control unit/card, configured to manage the recovery and charging steps and the sequence of operations required to implement the present invention.

The maintenance procedure of a conditioning system will now be described in detail: it includes at least the steps of:
- recovering the coolant fluid present in the air conditioning system, on the low pressure LP valve side;
- filtering the coolant fluid recovered;
- injecting the coolant fluid in the air conditioning system, on the high pressure HP valve side.

While charging, a vacuum pump placed downstream of the storage tank creates a depression that moves the coolant from the tank to the conditioning system.

Systems of the measurement of the mass associated with the tank may be provided, so as to monitor both the amount of coolant fluid recirculated and the amount subsequently injected in the air conditioning system.

Further devices or features may be implemented in the control logic and the configuration of the processing and management unit of station 20, without departing from the scope of the present invention which, as said, relates to a procedure configurable in the control unit of station 20 capable to implement and allow full recovery of the oil at the end of the coolant recovery for its subsequent re-introduction during charging of system 10.

Particularly, with reference to figure 2, an exhaust oil discharge valve 21 may be seen in the A/C service station: as mentioned, this is the lubricant oil (typically PAG or POE oil) circulating in the A/C system 10 of the vehicle to prevent the seizure of its compressor 4.

The operation of recovery and recycling of the coolant from the vehicle is preparatory to its refill, and is made so as to suck the coolant only in the vapor phase; nevertheless, a fraction of the oil is still recovered together with the coolant itself. Since the coolant must be recycled, i.e. contaminants (including said oil) removed therefrom, before being placed in a cylinder, the presence of an oil separator 22 is required, i.e. a distiller working by combined coalescent/evaporative effect.

The coolant vapor recovered from system 10 is sucked and sprayed against the metal wall of said distiller separator 22, kept sufficiently hot. The expansion of the coolant cools it down, favoring the deposition of oil droplets along the wall, while the heat of the wall itself facilitates evaporation of the coolant which continues its way along 23, i.e. to the compressor of the suction unit 18.

The oil droplets, sliding along the wall, encounter a coalescing filter 25 that facilitates the agglomeration thereof for a subsequent discharge from the bottom of the distiller into a collection vessel 24.

The amount of oil extracted must be measured so that an equal amount of new oil is refilled in the A/C system before the next charging with coolant, by the operator who carries out the maintenance on the A/C system.

Specifically, the amount of oil is measured either automatically, by means of an appropriate scale on the station, or visually, using graduated containers.

The amounts of oil extracted are typically on the order of 5-10 grams, in the case of medium-sized vehicles.

Since they are small amounts, it is understandable that, in order to attain an accurate measurement, the oil deposited on the walls of the distiller is as much as possible unloaded outside.

To this end, a full recovery methodology is implemented in station 20 that will be described hereinafter.

The methodology can be implemented in the processing and control unit 50 associated with station 20, using a proper configuration of the same, so as to carry out the recovery operation independently and in a fully automated manner.

In essence, at the end of the coolant recovery, i.e. after emptying the A/C system of the vehicle, in addition to discharging the exhaust oil as is normally the case, the following is carried out:
- taking and feeding a small amount of pure coolant, in the range of 50-100 grams, from the cylinder or tank 11 and automatically operating the recharge solenoid valve 12, and filling the pipes of the closed circuit formed by unit 20 and system 10, so as to establish a slight pressure (2-3 relative bar) therein,
- recovering and spraying said amount of coolant taken from cylinder 11 on the wall of distiller 22.

As said, the above operations can be managed via a control card or control unit configured to comply with the above operational protocol.

The net benefit to the user is that the discharge of the oil recovered is obtained at no cost (i.e. without additional hardware or electro-pneumatic mechanisms compared to a conventional station), with residues that typically are less than 5% (i.e. less than 5% of the oil recovered remains inside the distiller).

Moreover, with the slight pressure generated inside the circuit, any oil residues standing in the coalescing filter are conveyed towards the drain.

## Claims

1. Method of recovering exhaust oil from an air conditioning system (10) of motor vehicles, wherein said recovery is carried out at the end of a previous step of coolant recovery and emptying of said system (10) by means of a station (20); the method provides for configuring a processing and control unit (50) associated with said station (20) in order to:
a. take coolant from the station tank and feed a part thereof into the closed circuit formed by the station (20) and the system (10), previously emptied, until a pressure is established within said circuit,
b. recover said coolant via a unit (18) of the station (20) and spray it on the wall of a distiller (22) of said station (20),
c. recover further oil from said distiller.

2. Method according to claim 1, **characterized in that** it provides for feeding pure coolant.

3. Method according to claim 1, **characterized in that** it provides for feeding pure coolant on the order of 50-100 grams and reaching a pressure of 2-3 bar in the circuit.

4. Method according to claim 1, **characterized in that** it provides for feeding pure coolant, taking it from a tank (11) of the station (20).

5. Method according to claim 1, **characterized in that** it provides for measuring the amount of oil extracted and reintroducing said amount in the subsequent recharge step of the system (10).

6. Station (20) for the recovery and recharge of coolant fluid from an air conditioning system (10) for motor vehicles, comprising:
a. a coolant tank (11), or cylinder,
b. a shut-off solenoid valve (12) for opening and closing at least one coolant fluid outlet pipe (13),
c. high-pressure connection (14) connectable by means of a respective branch (15) to the conditioning system (10), by means of fitting/valve (8),
d. low-pressure connection (16) connectable by means of a respective branch (17) to the system (10), by means of fitting/valve (7),
e. a suction unit (18) adapted to suck the coolant from the conditioning system (10) through pipes (19),
f. an oil separator/distiller (22) and a coalescing filter (24),
g. at least one data processing and control unit/card (50) configured to manage at least the recovery and recharge steps;
**characterized in that** the control unit (50) is also configured to take a small amount of coolant from the tank (11) and, by operating the recharge solenoid valves (12), of the high pressure side of the recharge circuit, fill the conditioning circuit pipes formed as a result of the connection of the climate station to the conditioning circuit of the motor vehicle, then establish a relative pressure within said circuit; once said pressure has been created, said unit (50) is also configured to recover the amount of coolant introduced by spraying said recovered coolant on the wall of the distiller (22).

7. Station (20) according to claim 6, **characterized in that** the coolant taken from the tank (11) is pure.

8. Station (20) according to claim 6, **characterized in that** said coolant is on the order of 50-100 grams.
